# EUROPEAN PATENT SPECIFICATION

(11) **EP 2 105 373 B1**
(45) Date of publication and mention of the grant of the patent: **26.01.2011**
(21) Application number: 09003619.5
(22) Date of filing: 12.03.2009
(51) Int. Cl.: B62D 21/15

(54) **Frame structure for automotive vehicle and method of providing the same**
Rahmenstruktur für ein Automobil und Verfahren zu ihrer Bereitstellung
Structure à cadre pour véhicule automobile et procédé pour fournir celle-ci

(30) Priority: 24.03.2008 JP 2008074843
(43) Date of publication of application: 30.09.2009
(73) Proprietor: Mazda Motor Corporation, Fuchu-cho Aki-gun Hiroshima 730-8670 (JP)
(72) Inventor: Kowaki, Miho, Aki-gun, Hiroshima 730-8670 (JP); Terada, Sakayu, Aki-gun, Hiroshima 730-8670 (JP); Sawada, Yosuke, Aki-gun, Hiroshima 730-8670 (JP); Kizaki, Isamu, Aki-gun, Hiroshima 730-8670 (JP)
(74) Representative: Müller-Boré & Partner Patentanwälte

(56) References cited:
- EP-A- 1 149 756
- FR-A- 2 809 072
- JP-A- 2003 220 977
- US-A1- 2006 170 206

## Description

The present invention relates to a frame structure of an automotive vehicle and a method of providing the same, and in particular, relates to the structure for impact absorption.

A frame structure of an automotive vehicle comprises, for example, a dash panel which partitions an engine room from a vehicle compartment, and a frame member which is provided in front of the dash panel so as to extend substantially straight in a vehicle longitudinal direction, a rear end portion of which connects to the dash panel. Herein, there is a concern that the dash panel may retreat in case an impact load is inputted to the frame member in the vehicle longitudinal direction at a vehicle front collision or the like.

An example of a technology to cope with the above-described concern is disclosed in Japanese Patent Laid-Open Publication No. 2003-220977, for example. According this example, at the frame member is provided a bend portion operative to bend in a vehicle width direction when the impact load is inputted to the frame member in the vehicle longitudinal direction. Thereby, the impact load may be absorbed by bending of the frame member, so that the dash panel can be restrained from retreating properly.

Herein, since the bend portion is formed by reinforcing one of the sides of the frame member with a reinforcement member in the above-described example, there is need to provide an additional member of the reinforcement member. This would cause a problem of an increase of the number of members.

EP 1 149 756 A2 discloses a body structure of vehicle according to the preamble of claims 1 and 8 comprising side frames which include widthwise rigidity lowering sections so as to allow inward bending of a rear section of each side frame member.

US 2006/0 170 206 A1 describes a vehicle front body structure including a hollow front side frame of closed cross-sectional structure and reinforcement beads.

FR 2 809 072 A1 discloses a structure of box-shaped longitudinal beams in a crash zone of an automotive vehicle.

An object of the present invention is to provide a frame structure and a method of providing the same which can properly absorb an impact load and, at the same time, be manufactured with low costs.

The object is solved by the features of the independent claims. Preferred embodiments of the present invention are subject of the dependent claims.

According to the present invention, there is provided a frame structure of an automotive vehicle, comprising a frame member which has a substantially rectangular closed cross section and is provided so as to extend substantially straight in a vehicle longitudinal direction, a rear end portion of which connects or is connectable to a dash panel, and a bend portion provided at the frame member, the bend portion being operative to bend in a specified direction substantially in a vehicle width direction when an impact load is inputted to the frame member substantially in the vehicle longitudinal direction, wherein the frame member has different cross sections in the vehicle longitudinal direction in such a manner that a centroid or center of gravity of the bend portion of the frame member is offset to the specified direction of the vehicle width direction from a centroid or center of gravity of a different portion of the frame member from the bend portion, wherein both side faces of the bend portion of the frame member have projections which project outward respectively in such a manner that a projecting height of the projection on a specified side face of the frame member which is located on a side of the specified direction of the vehicle width direction is greater than that of the projection on an opposite side face of the frame member to the specified side face.

According to the present invention, since the centroid of the bend portion of the frame member is offset to the specified direction of the vehicle width direction from the centroid of the different portion of the frame member from the bend portion, the bend portion can be properly provided integrally with the frame member without causing any improper increase of the number of member. In other words, the frame member and the bend portion are manufactured from only one part. Accordingly, the manufacturing costs can be remarkably reduced due to the reduced number of components and a reduced work load in the assembling procedure.

Herein, the centroid or center of gravity is a well-known technical term which is used in the fields of the strength of materials and the like. In case the bend portion of the frame member has offset of the centroid as described above, the input of the impact load may cause a moment which functions so as to rotate the cross section of the bend portion relative to the cross section of the different portion from the bend portion in the plan view. Accordingly, the frame member bends properly. In other words, a predetermined bending or buckling of the frame member occurs when an impact load is applied due to the bend portion.

According to an embodiment of the present invention, the frame member comprising a first member and a second member which are located substantially in the vehicle width direction and have a substantially U-shaped cross section respectively, the first and second members being joined to each other via upper and lower flange portions thereof so as to form a substantially closed cross section of the frame member which extends substantially in the vehicle longitudinal direction, and the first and second members preferably have different shapes of the substantially U-shaped cross section in the vehicle longitudinal direction respectively in such a manner that the upper and lower flange portions thereof at the bend portion of the frame member are preferably located offset to the specified direction of the vehicle width direction from the upper and lower flange portions thereof at the different portion of the frame member from the bend portion. Thereby, the offset of the centroid of the bend portion can be materialized easily.

According to another embodiment of the present invention, a joining line of the upper and lower flange portions of the first and second members at a front portion in front of the bend portion of the frame member and a rear portion in back of the bend portion of the frame member extends substantially straight and/or obliquely relative to a longitudinal direction of the frame member in a plan view. Thus, the flange portions turn from side to side at the bend portion in the vehicle width direction, so that the position of the bend portion can be specified surely. Thereby, the frame member bends surely at the bend portion.

According to another embodiment of the present invention, a plurality of the bend portions of the frame member which are operative to bend in opposite directions of the vehicle width direction to each other are provided, and/or the joining line of the upper and lower flange portions of the first and second members at a portion between the bend portions of the frame member extends substantially straight and/or obliquely relative to the longitudinal direction of the frame member in the plan view. Thereby, the bending of the frame member can be achieved easily compared to a case in which the joining line of the flange portions extends in a curve shape.

According to another embodiment of the present invention, the frame member has a substantially rectangular closed cross section which extends substantially in the vehicle longitudinal direction, and/or both side faces of the bend portion of the frame member have beads which are recessed toward an opposite side thereof respectively in such a manner that a depth of the recessed bead on a specified side face of the frame member which is located on a side of the specified direction of the vehicle width direction is preferably shallower than that of the recessed bead on an opposite side face of the frame member to the specified side face. Thereby, the offset of the centroid of the bend portion can be materialized easily.

According to another embodiment of the present invention, respective bottom portions of the recessed beads are joined to each other. Thereby, the impact energy can be properly absorbed by friction of the bottom portions of the recessed beads which occurs at the bending of the frame member.

According to another embodiment of the present invention, a vertical length of the recessed bead on the specified side face of the frame member which is located on the side of the specified direction of the vehicle width direction is smaller than that of the recessed bead on the opposite side face of the frame member to the specified side face. Thereby, the offset of the centroid can be achieved properly even in case the width of the frame member is considerably small.

According to the present invention, the frame member has a substantially rectangular closed cross section which extends substantially in the vehicle longitudinal direction, and both side faces of the bend portion of the frame member have projections which project outward respectively in such a manner that a projecting height of the projection on a specified side face of the frame member which is located on a side of the specified direction of the vehicle width direction is greater than that of the projection on an opposite side face of the frame member to the specified side face. Thereby, the offset of the centroid of the bend portion can be materialized easily.

According to another embodiment of the present invention, a vertical length of the projection on the specified side face of the frame member which is located on the side of the specified direction of the vehicle width direction is greater than that of the projection on the opposite side face of the frame member to the specified side face. Thereby, the offset of the centroid of the bend portion can be provided, restraining the height of the projections properly.

According to another embodiment of the present invention, the bend portion is located so as to be offset from a suspension damper of a suspension member substantially in the vehicle longitudinal direction. Thereby, the bend portion which bends is prevented from interfering with the suspension damper, so that the proper bending of the frame member can be achieved.

According to a further aspect of the invention, there is provided a method of providing a frame structure of an automotive vehicle, comprising the steps of:
providing a frame member having a substantially rectangular closed cross section so as to extend substantially straight in a vehicle longitudinal direction, a rear end portion of which connects or is connectable to a dash panel;
providing a bend portion at the frame member, the bend portion being operative to bend in a specified direction substantially in a vehicle width direction when an impact load is inputted to the frame member substantially in the vehicle longitudinal direction,
forming said frame member such that it has different cross sections in the vehicle longitudinal direction in such a manner that a centroid of said bend portion of the frame member is offset to said specified direction of the vehicle width direction from a centroid of a different portion of the frame member from the bend portion, and
forming projections on both side faces of the bend portion of the frame member have which project outward respectively in such a manner that a projecting height of the projection on a specified side face of the frame member which is located on a side of the specified direction of the vehicle width direction is greater than that of the projection on an opposite side face of the frame member to the specified side face.

Preferably, the method further comprising the steps of:
providing said frame member with a first member and a second member which are located substantially in the vehicle width direction and have a substantially U-shaped cross section respectively,
joining the first and second members to each other via upper and lower flange portions thereof so as to form a substantially closed cross section of the frame member which extends substantially in the vehicle longitudinal direction, wherein said first and second members preferably have different shapes of the substantially U-shaped cross section in the vehicle longitudinal direction respectively in such a manner that the upper and lower flange portions thereof at said bend portion of the frame member are preferably located offset to said specified direction of the vehicle width direction from the upper and lower flange portions thereof at the different portion of the frame member from the bend portion.

Other features, aspects, and advantages of the present invention will become apparent from the following description which refers to the accompanying drawings.
FIG. **1** is a plan view of a front portion of a vehicle which is equipped with a frame structure of an automotive vehicle according to a comparative example.
FIG. **2A** is an enlarged plan view of a front side frame on a side which is denoted by an arrow **P** of FIG. **1****,** and FIG. **2B** is a side view of the front side frame of FIG. **2A** when viewed in a direction which is denoted by an arrow **L.**
FIGS. **3A, 3B, 3C, 3D** and **3E** are sectional views of the front side frame taken along lines A-A, B-B, C-C, D-D and E-E respectively of FIG. **2B**.
FIG. **4** is an explanatory view of an action when an impact load is inputted.
FIG. **5A** is an enlarged plan view of a front side frame of a frame structure of an automotive vehicle according to a second comparative example, which corresponds to FIG. **2A****,** and FIG. **5B** is a sectional view taken along line M-M of FIG. **5A****.**
FIG. **6** is a sectional view of a front side frame of a frame structure of an automotive vehicle according to a third comparative example, which corresponds to FIG. **3C****.**
FIG. **7A** is an enlarged plan view of a front side frame of a frame structure of an automotive vehicle according to an embodiment on the side which is denoted by the arrow **P** of FIG. **1****,** and FIG. **7B** is a side view of the front side frame of FIG. **7A** when viewed in a direction which is denoted by an arrow **N**
FIGS. **8A, 8B, 8C, 8D** and **8E** are sectional views of the front side frame taken along lines F-F, G-G, H-H, I-I and J-J respectively of FIG. **7B**.

Hereinafter, a frame structure of an automotive vehicle according to preferred embodiments of the present invention will be described. Although the embodiments are described separately, it is to be understood that single features of an embodiment can be combined with another embodiment.

### COMPARITIVE EXAMPLE 1

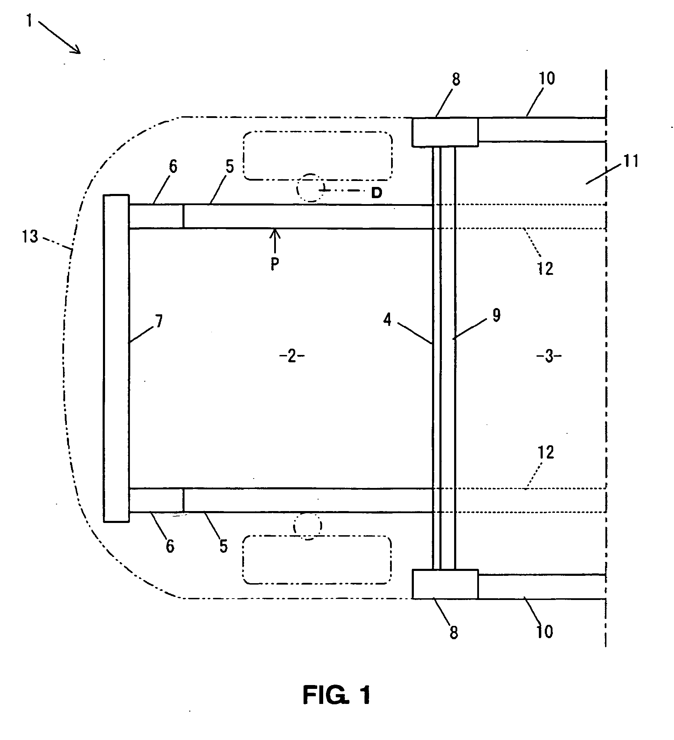

A vehicle body of an automotive vehicle **1** according to the present comparative example comprises, as shown in FIG. **1****,** a dash panel **4** which partitions an engine room **2** from a vehicle compartment **3,** a pair of front side frames **5, 5** which extend straight in a vehicle longitudinal direction in front of the dash panel **4** on both (left and right) sides, rear end portions of which connect to the dash panel **4,** a bumper reinforcement **7** which is provided at front end portions of the front side frames **5, 5** via crush cans **6, 6,** hinge pillars **8, 8** which are provided at both-side end portions of the dash panel **4** so as to extend vertically and support front end portions of front doors (not illustrated), a dash reinforcement **9** which is provided at a back face of the dash panel **4** so as to interconnect the both-side hinge pillars **8, 8,** side sills **10, 10** which connect to the lower ends of the hinge pillars **8, 8** at front end portions thereof and extend rearward, and floor frames **12, 12** which extend in the vehicle longitudinal direction below the floor panel **11** which forms a floor face of the vehicle compartment **3,** front end potions of which preferably connect to rear end portions of the front side frames **5, 5.**

Herein, when the impact load is inputted to the bumper reinforcement **7** via a bumper face **13** and the like at a vehicle front collision or the like, it is transmitted so as to disperse to members of a vehicle body **4-12** via the crush cans **6, 6** and front side frames **5, 5.**

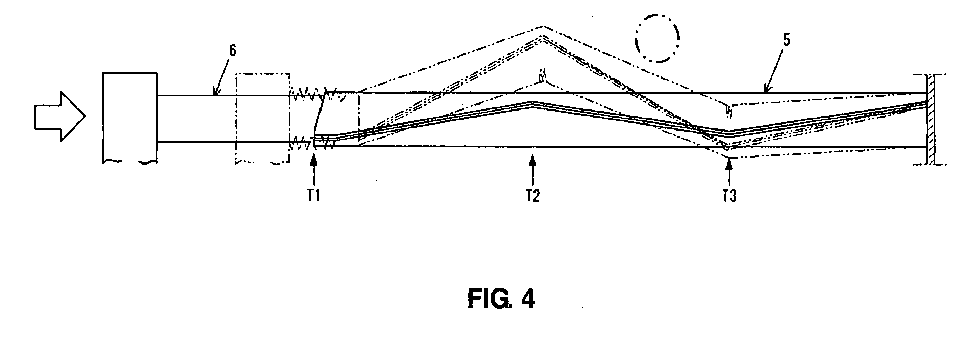

According to the present comparative example, when the impact load is inputted to the vehicle body substantially in the vehicle longitudinal direction, the crush cans **6** crush in an axial direction thereof. The front side frame **5** has at least one bend portion, preferably a plurality of bend portions **T1-T3,** which are operative to bend in a vehicle width direction due to the impact load being inputted (see FIG. **4**). Hereinafter, the structure will be described.

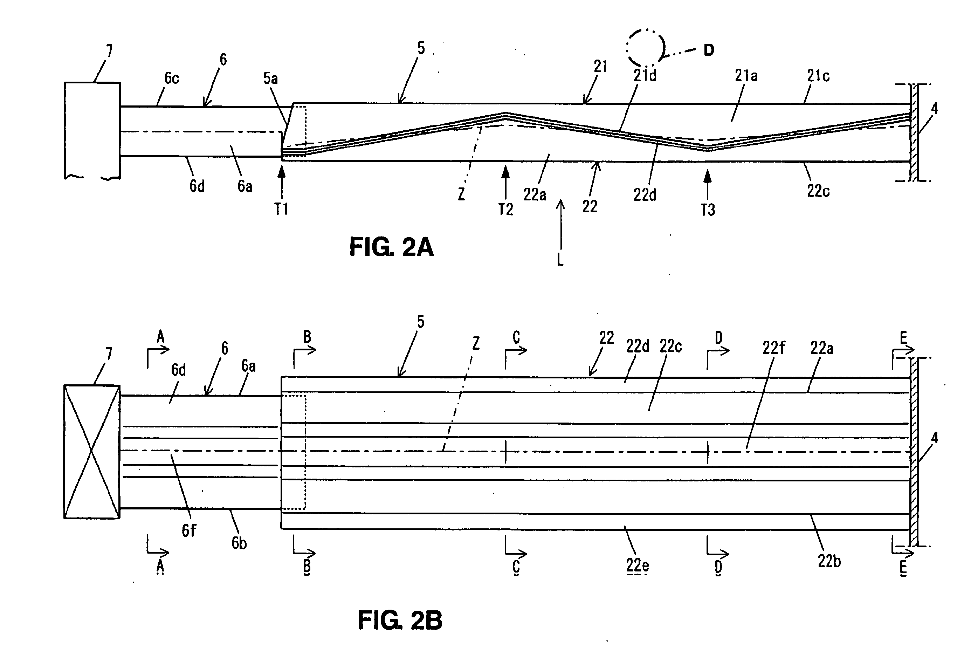

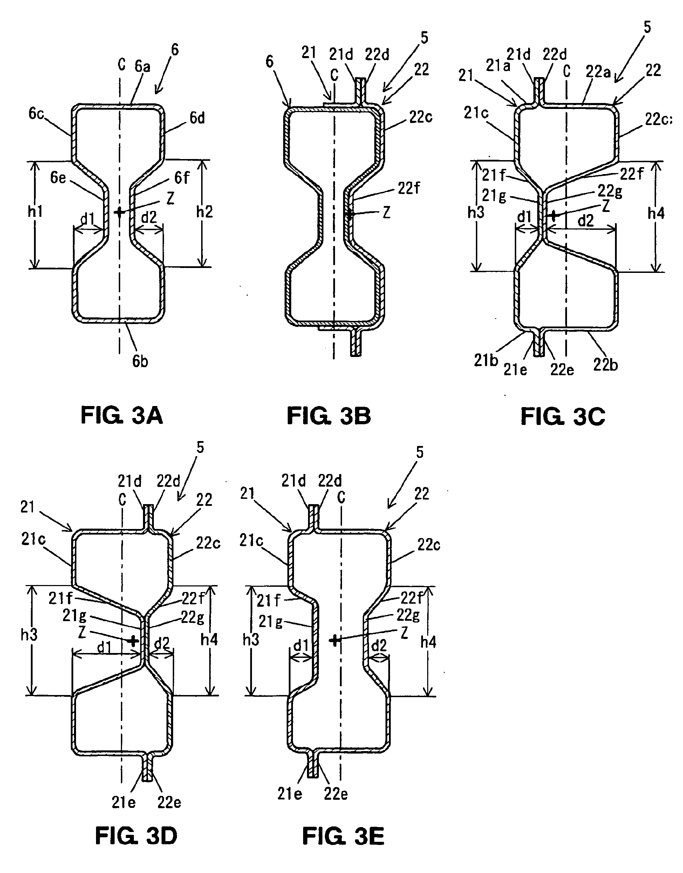

As shown in FIGS. **2A, 2B** and **3A**, the crush can **6** is preferably made of aluminum material, for example, and it has an upper face portion **6a,** a lower face portion **6b,** and left and right side face portions **6c, 6d** so as to form a rectangular closed cross section which extends substantially straight in the vehicle longitudinal direction. At both side face portions **6c, 6d** are preferably formed beads **6e, 6f** which are recessed toward their opposite side face portions **6d, 6c** respectively and extend in the vehicle longitudinal direction. Herein, the depth **d1, d2** and the vertical length **h1, h2** of these beads **6e, 6f** are preferably the same respectively. Thus, the cross section of the crush can is preferably symmetrical. Further, the thickness and the like of the crush can **6** is configured such that the crush can **6** crushes in an axis direction (a longitudinal direction of the crush can **6)** so as to have a compressive deformation in bellows shape when the impact load is inputted substantially in the vehicle longitudinal direction.

Further, the front side frame **5** preferably comprises, as shown in FIGS. **2A, 2B**, **3C-3E**, a first member **21** which preferably includes an upper face portion **21a,** a lower face portion **21b,** a side face portion **21c** and upper and lower flange portions **21d, 21e** so as to have a substantially U-shaped cross section, and a second member **22** which preferably includes an upper face portion **22a,** a lower face portion **22b,** a side face portion **22c** and upper and lower flange portions **22d, 22e** so as to have a substantially U-shaped cross section. The upper flange portions **21d, 22d** and the lower flange portions **21e, 22e** of the first and second members **21, 22** are preferably joined to each other respectively so as to provide the substantially rectangular closed cross section which extends substantially straight in the vehicle longitudinal direction.

Further, at both side face portions **21c, 22c** of the first and second members **21, 22** are formed beads **21f, 22f** which are preferably recessed toward their opposite side face portions **22c, 21c** respectively and extend in the vehicle longitudinal direction. These beads **21f, 22f** are provided to strengthen the function of absorption of the impact load by the front side frame **5.**

Next, the structure of the bend portions **T1-T3** will be described. Apparent from FIGS. **2A, 2B** and **3B** (a cross section which is located slightly in back of the bend portion **T1),** the bend portion **T1** is preferably provided at a connection portion of the crush can **6** to the front side frame **5,** specifically at the front end of the front side frame **5.** This bend portion **T1** is preferably configured by a difference in the rigidity between the crush can **6** and the front side frame **5.** A front end **5a** of the front side frame **5** is preferably formed so as to be slant in such a manner that its outward portion is positioned rearward from its inward portion. Thereby, the front side frame **5** bends outward at the bend portion **T2.**

Meanwhile, the centroid of the bend portions **T2, T3** of the front side frame **5** is offset to a specified direction of the vehicle width direction from the centroid of the different portion of the front side frame 5 from the bend portions **T2, T3.**

That is, as apparent from FIGS. **2A, 2B** and **3C****,** the upper flange portions **21d, 22d** and the lower flange portions **21e, 22e** at the bend portion **T2** are preferably located offset to the above-described specified direction of the vehicle width direction, i.e., outward of the vehicle, from the upper and lower flange portions **21d, 22d, 21e, 22e** at the different portion from the bend portion **T2.** Further, while a vertical length **h3** of the bead **21f** is preferably the same as a vertical length **h4** of the bead **22f** (which is the same as other portions in the longitudinal direction), a depth **d1** of the outside bead **21f** is preferably shallower than a depth **d2** of the inside bead **22f.** Thus, the centroid **Z** of the bend portion **T2** is offset toward the side of the side face portion **21c** of the first member **21** from a middle (center) position **C** between the side face portions **21c, 22c** of the front side frame **5.** Also, as apparent from FIG. **2A****,** the centroid **Z** of the bend portion **T2** is offset outward of the vehicle from the centroid **Z** of the different portion from the bend portion **T2.** Herein, as shown in FIGS. 1, **2A** and **4****,** the vehicle has a suspension damper **D** of a suspension member which is located outside the front side frame **5,** and the bend portion **T2** is located so as to be offset from the suspension damper **D** in the vehicle longitudinal direction. Thereby, the bend portion **T2** which bends is prevented from interfering with the suspension damper **D.**

Further, as apparent from FIGS. **2A, 2B** and **3D****,** the upper flange portions **21d, 22d** and the lower flange portions **21e, 22e** at the bend portion **T3** are preferably located offset to the above-described specified direction of the vehicle width direction, i.e., inward of the vehicle because the bending direction of the bend portion **T3** is opposite to that of the above-described bend portion **T2,** from the upper and lower flange portions **21d, 22d, 21e, 22e** at the different portion from the bend portion **T3.** Further, a depth **d2** of the inside bead **22f** is preferably shallower than a depth **d1** of the outside bead **21f.** Thus, the centroid **Z** of the bend portion **T3** is offset toward the side of the side face portion **22c** of the second member **22** from the middle (center) position **C** between the side face portions **21c, 22c** of the front side frame 5. That is, the centroid **Z** of the bend portion **T3** is preferably offset inward of the vehicle from the centroid **Z** of the different portion from the bend portion **T3.**

Further, as apparent from FIGS. **2A, 2B** and **3E****,** the upper flange portions **21d, 22d** and the lower flange portions **21e, 22e** at a portion of the front side frame **5** which is positioned near its connection portion to the dash panel **4** are preferably located similarly to the bend portion **T2.** A depth **d1** of the outside bead **21f** is substantially the same as a depth **d2** of the inside bead **22f.** Herein, the front side frame 5 does not bend at this portion near the connection portion to the dash panel.

Further, as apparent from FIG. **2A****,** a joining line of the upper flange portions **21d, 22d** and the lower flange portions **21e, 22e** at a portion of the front side frame **5** between the bend portions **T2, T3** extends substantially straight and/or obliquely relative to a longitudinal direction of the front side frame **5** in the plan view.

The beads **21f, 22f** preferably have bottom portions **21g, 22g** respectively which are formed at the side face portions **21c, 22c,** and these bottom portions **21g, 22g** are preferably joined to each other at the bend portions **T2, T3.**

Hereinafter, the operation of the present comparative example will be described.

When the impact load is inputted to the vehicle body substantially in the vehicle longitudinal direction, the crush can **6** crushes so as to deform in the axis direction and the front side frame **5** bends substantially in the vehicle width direction at the bend portions **T1-T3** as shown by broken lines in FIG. **4****.**

Herein, since the centroid **Z** of the bend portions **T2, T3** of the front side frame **5** is offset in the vehicle width direction from the centroid **Z** of the different portion of the front side frame **5** from the bend portions **T2, T3,** the bend portions **T2, T3** can be properly provided without causing any improper increase of the number of member.

Also, the above-described offset of the centroid of the bend portions **T2, T3** can be materialized easily by the structure in which the upper flange portions **21d, 22d** and the lower flange portions **21e, 22e** at the bend portions **T2, T3** are located offset to the above-described specified direction of the vehicle width direction from the upper flange portions **21d, 22d** and the lower flange portions **21e, 22e** at the different portion of the front side frame **5** from the bend portions **T2, T3.**

Further, since the respective joining lines of the upper flange portions **21d, 22d** and the lower flange portions **21e, 22e** at the front portion in front of the bend portions **T2, T3** and the rear portion in back of the bend portions **T2, T3** extend substantially straight and/or obliquely relative to the longitudinal direction of the front side frame **5** in the plan view, these flange portions turn from side to side at the bend portions **T2, T3** in the vehicle width direction, so that the position of the bend portions **T2, T3** can be specified surely. Thereby, the front side frame **5** bends surely at the bend portions **T2, T3.**

Also, since the plural bend portions **T2, T3** operative to bend in the opposite directions of the vehicle width direction to each other are provided, and the joining line of the upper flange portions **21d, 22d** and the lower flange portions **21e, 22e** at the portion between the bend portions **T2, T3** extends substantially straight and/or obliquely relative to the longitudinal direction of the front side frame **5** in the plan view, the bending of the front side frame **5** can be achieved easily compared to a case in which the joining line of the flange portions extends in a curve shape.

Further, the offset of the centroid of the bend portions **T2, T3** can be materialized easily by the structure in which the depth of the beads **21f, 22f** is different from each other.

Also, since the bottom portions **21g, 22g** of the recessed beads **21f, 22f** are joined to each other, the impact energy can be properly absorbed by friction of the bottom portions **21g, 22g** which occurs at the bending of the front side frame 5. Further, the deformation of the side face portions **21c, 22c** of the beads **21f, 22f** can be controlled properly.

While both the offset joining line provision of the upper flange portions **21d, 22d** and the lower flange portions **21e, 22e** and the different depth **d1**, **d2** of the beads **21f, 22f** are provided to make the offset provision of the centroid **Z** in the above-described comparative example, either one of these may be applied for the offset of the centroid **Z.** In this case, the strength of the front side frame **5** may be considered for this application.

### COMPARATIVE EXAMPLE 2

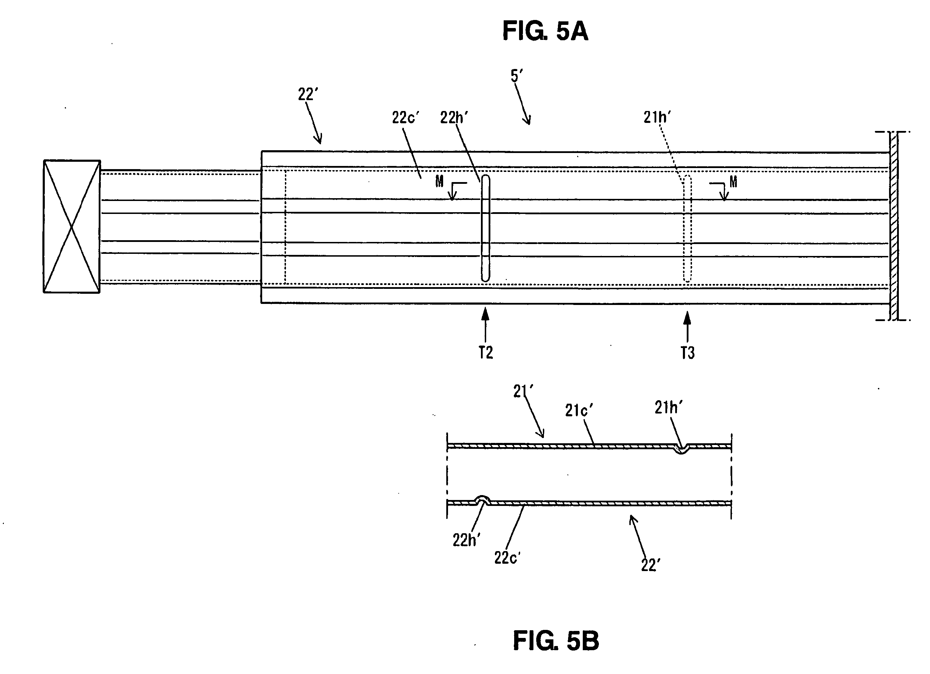

In a second comparative example, as shown in FIG. **5****,** the bend portions **T2, T3** of a first member **21'** and a second member **22'** which forms a front side frame **5'** has vertical beads **21h', 22h'** on their side face portions **21c', 22c'.** The vertical beads **21h', 22h'** preferably extend substantially vertically and are preferably recessed in the bending direction of the bend portions **T2, T3,** respectively. Thereby, the front side frame **5'** bends surely at the bend portions **T2, T3.**

### COMPARATIVE EXAMPLE 3

Next, a third comparative example will be described.

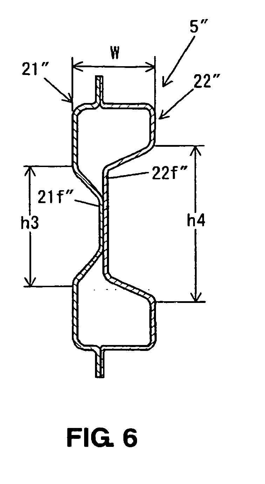

In the third comparative example, a front side frame **5"** has a narrower width **W** than the first and second comparative examples as shown in FIG. **6****.** This is because this frame **5"** may be properly applied to a relatively narrow layout space for the frame **5"** at the front portion of the vehicle.

Herein, a vertical length **h3** of a bead **21f"** of a first member **21"** which forms a front side frame **5"** is not equal to a vertical length **h4** of a bead **22f"** of a second member **22".** Thus, the centroid **Z** can be positioned to be offset more toward the first member **21"** compared to the case in which the both vertical lengths are equal to each other. Thereby, the offset of the centroid **Z** can be achieved properly even in case the width **W** of the front side frame **5** is considerably small.

### EMBODIMENT

An embodiment of the present invention will be described.

In the embodiment, as shown in **7A, 7B, 8A-8E**, a crush can **106** has an upper face portion **106a,** a lower face portion **106b** and side face potions **106c, 106d** so as to form a substantially rectangular closed cross section which extends substantially straight in the vehicle longitudinal direction. The both side face portions **106c, 106d** have projections **106e, 106f** which project outward respectively. Heights **d1, d2** and vertical lengths **h1, h2** of the projections **106e, 106f** are preferably substantially equal to each other, respectively, such that the cross section of the crush can **106** is symmetrical. Further, the thickness and the like of the crush can **106** is preferably configured such that the crush can **10** crushes in the axis direction (longitudinal direction of the crush can **106**) so as to have the compressive deformation in bellows shape when the impact load is inputted in the vehicle longitudinal direction.

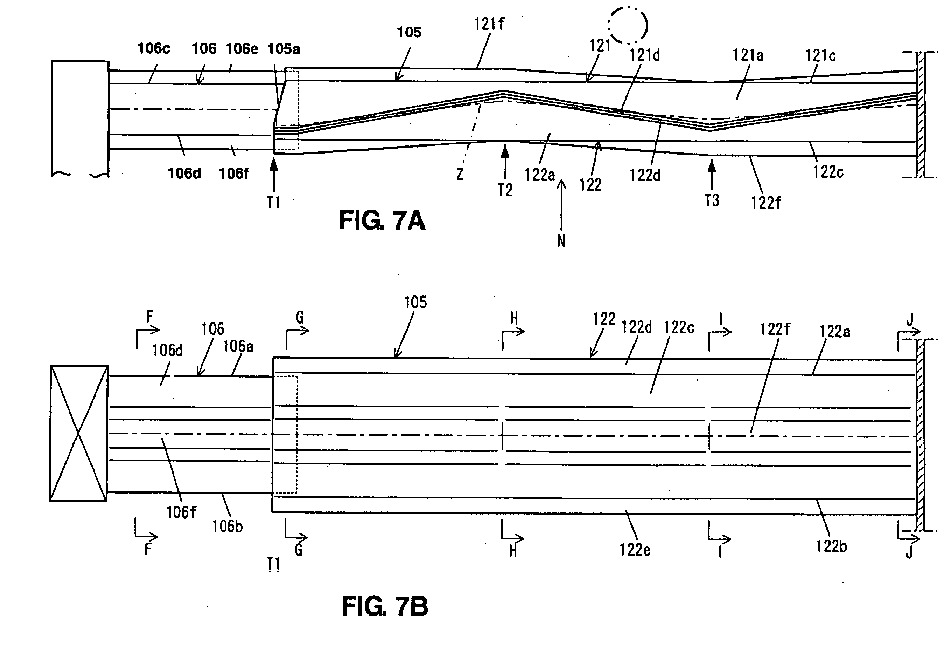

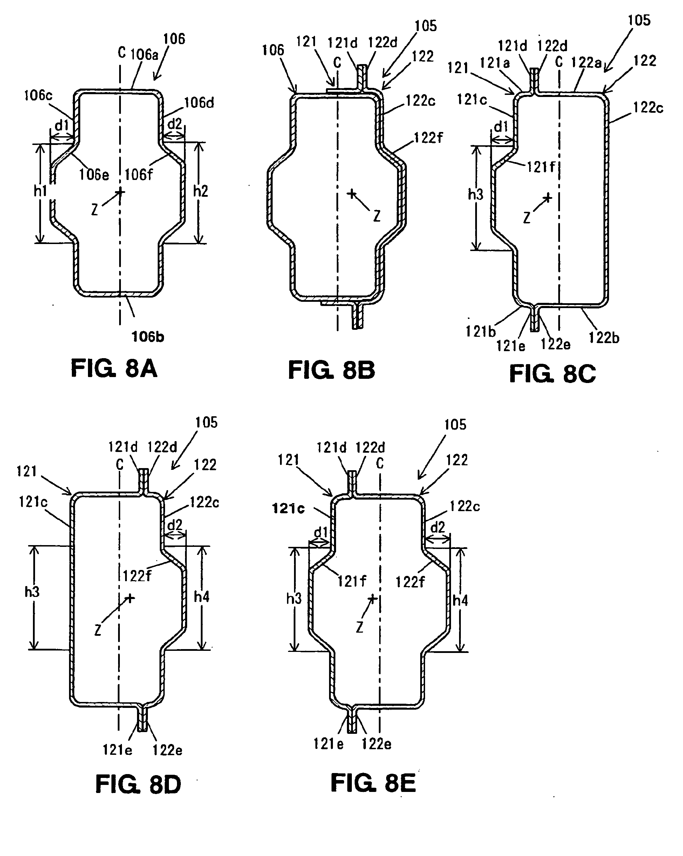

Further, the front side frame **105** preferably comprises, as shown in FIGS. **7A, 7B**, **8C-8E**, a first member **121** which preferably includes an upper face portion **121a,** a lower face portion **121b,** a side face portion **121c** and upper and lower flange portions **121d, 121e** so as to have a substantially U-shaped cross section, and a second member **122** which preferably includes an upper face portion **122a,** a lower face portion **122b,** a side face portion **122c** and upper and lower flange portions **122d, 122e** so as to have a substantially U-shaped cross section. The upper flange portions **121d, 122d** and the lower flange portions **121e, 122e** of the first and second members **121, 122** are preferably joined to each other respectively so as to provide the substantially rectangular closed cross section which extends substantially straight in the vehicle longitudinal direction.

Further, at both side face portions **121c, 122c** of the first and second members **121, 122** are preferably formed projections **121f, 122f** which project preferably toward the opposite sides to the side face portions **122c, 121c** respectively and extend preferably substantially in the vehicle longitudinal direction. These projections **121f, 122f** are provided to strengthen the function of absorption of the impact load by the front side frame **105.**

Next, the structure of the bend portions **T1-T3** will be described. Apparent from FIGS. **7A, 7B** and **8B** (a cross section which is located slightly in back of the bend portion **T1**), the bend portion **T1** is preferably provided at a connection portion of the crush can **106** to the front side frame **105,** specifically substantially at the front end of the front side frame **105.** This bend portion **T1** is preferably configured by a difference in the rigidity between the crush can **106** and the front side frame **105.** A front end **105a** of the front side frame **105** is preferably formed so as to be slant in such a manner that its outward portion is positioned rearward from its inward portion. Thereby, the front side frame **105** bends outward at the bend portion **T2.**

That is, as apparent from FIGS. **7A, 7B** and **8C****,** the upper flange portions **121d, 122d** and the lower flange portions **121e, 122e** at the bend portion **T2** are preferably located offset to the above-described specified direction of the vehicle width direction, i.e., outward of the vehicle, from the upper and lower flange portions **121d, 122d, 121e, 122e** at the different portion from the bend portion **T2.** Further, a height **d1** of the outside projection **121f** is preferably greater than a height **d2** of the inside projection **122f** (the height **d2** is zero at this portion). Thus, the centroid **Z** of the bend portion **T2** is preferably offset outward of the vehicle from the centroid **Z** of the different portion from the bend portion **T2.**

Further, as apparent from FIGS. **7A, 7B** and **8D****,** the upper flange portions **121d, 122d** and the lower flange portions **121e, 122e** at the bend portion **T3** are preferably located offset to the above-described specified direction of the vehicle width direction, i.e., inward of the vehicle from the upper and lower flange portions **121d, 122d, 121e, 122e** at the different portion from the bend portion **T3** (similar to the above-described first embodiment regarding the flange portions). Further, the height **d2** of the inside projection **122f** is preferably greater than the height **d1** of the outside projection **121f** (the height **d1** is zero at this portion). Thus, the centroid **Z** of the bend portion **T3** is preferably offset inward of the vehicle from the centroid **Z** of the different portion from the bend portion **T3.**

Further, as apparent from FIGS. **7A, 7B** and **8E****,** the upper flange portions **121d, 122d** and the lower flange portions **121e, 122e** at a portion of the front side frame **105** which is positioned near its connection portion to the dash panel **4** are preferably located similarly to the bend portion **T2.** A height **d1** of the outside projection **121f** is preferably substantially the same as a height **d2** of the inside projection **122f.** Herein, the front side frame **105** does not bend at this portion near the connection portion to the dash panel.

According to the present embodiment, the offset of the centroid **Z** of the bend portions **T2, T3** can be materialized easily by the structure in which the height of the projections **121f, 122f** is different from each other.

Herein, the vertical length may be set to be different from each other like the above-described third embodiment. Thereby, the centroid may be offset properly, restraining the projection height.

While the front side frame is configured to bend substantially in the vehicle width direction in the above-described embodiments, the present invention is applicable to any case in which the front side frame bends vertically or in any angle direction between the lateral direction and the vertical direction. Further, while either the recessed bead or the projection are formed at the both side faces of the front side frame in the above-described embodiments, the combination of these may be applied in such a manner that the projection is formed at the bending-direction side and the recessed bead is formed at the other side.

Any other modifications and improvements may be applied within the scope of the present invention, as defined in the appended claims.

## Claims

1. A frame structure of an automotive vehicle **(1),** comprising:
a frame member **(105)** which has a substantially rectangular closed cross section and is provided so as to extend substantially straight in a vehicle longitudinal direction, a rear end portion of which connects or is connectable to a dash panel **(4);** and
a bend portion **(T2, T3)** provided at the frame member **(105),** the bend portion **(T2, T3)** being operative to bend in a specified direction substantially in a vehicle width direction when an impact load is inputted to the frame member **(5; 5'; 5"; 105)** substantially in the vehicle longitudinal direction,
wherein said frame member **(105)** has different cross sections in the vehicle longitudinal direction in such a manner that a centroid **(Z)** of said bend portion **(T2, T3)** of the frame member **(105)** is offset to said specified direction of the vehicle width direction from a centroid **(Z)** of a different portion of the frame member **(105)** from the bend portion **(T2, T3),**
**characterized in that**
both side faces **(121c, 122c)** of said bend portion **(T2, or T3)** of the frame member **(105)** have projections **(121f, 122f)** which project outward respectively in such a manner that a projecting height **(d1, or d2)** of the projection **(121f, or 122f)** on a specified side face **(121c, or 122c)** of the frame member **(105)** which is located on a side of said specified direction of the vehicle width direction is greater than that **(d2, or d1)** of the projection **(122f, or 121f)** on an opposite side face **(122c, or 121c)** of the frame member **(105)** to said specified side face **(121c, or 122c).**

2. The frame structure of an automotive vehicle **(1)** of claim 1, wherein said frame member **(105)** comprising a first member **(121)** and a second member **(122)** which are located substantially in the vehicle width direction and have a substantially U-shaped cross section respectively, the first and second members **(121, 122)** being joined to each other via upper and lower flange portions **(121d, 122d, 121e, 122e)** thereof so as to form a substantially closed cross section of the frame member **(105)** which extends substantially in the vehicle longitudinal direction, and said first and second members **(121, 122)** preferably have different shapes of the substantially U-shaped cross section in the vehicle longitudinal direction respectively in such a manner that the upper and lower flange portions **(121d, 122d, 121e, 122e)** thereof at said bend portion **(T2, T3)** of the frame member **(105)** are preferably located offset to said specified direction of the vehicle width direction from the upper and lower flange portions **(121d, 122d, 121e, 122e)** thereof at the different portion of the frame member **(105)** from the bend portion **(T2, T3).**

3. The frame structure of an automotive vehicle **(1)** of claim 2, wherein a joining line of said upper and lower flange portions **(121d, 122d, 121e, 122e)** of the first and second members **(121, 122)** at a front portion in front of said bend portion **(T2, T3)** of the frame member **(105)** and a rear portion in back of said bend portion **(T2, T3)** of the frame member **(105)** extends substantially straight and/or obliquely relative to a longitudinal direction of the frame member **(105)** in a plan view.

4. The frame structure of an automotive vehicle (1) of any one or more of the preceding claims, wherein a plurality of said bend portions **(T2, T3)** of the frame member **(105)** which are operative to bend in opposite directions of the vehicle width direction to each other are provided, and/or the joining line of the upper and lower flange portions **(121d, 122d, 121e, 122e)** of the first and second members **(121, 122)** at a portion between the bend portions **(T2, T3)** of the frame member **(105)** extends substantially straight and/or obliquely relative to the longitudinal direction of the frame member **(105)** in the plan view.

5. The frame structure of an automotive vehicle **(1)** of any one or more of the preceding claims, wherein a vertical length **(h3, or h4)** of the projection **(121f, or 122f)** on the specified side face **(121c, or 122c)** of the frame member **(105)** which is located on the side of said specified direction of the vehicle width direction is greater than that **(h4, or h3)** of the projection **(122f, or 121f)** on the opposite side face **(122c, or 121c)** of the frame member **(105)** to the specified side face **(121c, or 122c).**

6. The frame structure of an automotive vehicle **(1)** of any one or more of the preceding claims, wherein said bend portion **(T2)** is located such as to be offset substantially in the vehicle longitudinal direction from a suspension damper **(D)** of a suspension member of the vehicle (1) which is located outside said frame member **(105).**

7. The frame structure of an automotive vehicle **(1)** of any one or more of the preceding claims, wherein a crush can (106) having substantially the same cross section as the front side frame (105) at a front portion thereof is provided at said front portion of said front side frame (105).

8. A method of providing a frame structure of an automotive vehicle (1), comprising the steps of:
providing a frame member **(105)** having a substantially rectangular closed cross section so as to extend substantially straight in a vehicle longitudinal direction, a rear end portion of which connects or is connectable to a dash panel **(4);**
providing a bend portion **(T2, T3)** at the frame member **(105),** the bend portion **(T2, T3)** being operative to bend in a specified direction substantially in a vehicle width direction when an impact load is inputted to the frame member **(105)** substantially in the vehicle longitudinal direction, and
forming said frame member **(105)** such that it has different cross sections in the vehicle longitudinal direction in such a manner that a centroid **(Z)** of said bend portion **(T2, T3)** of the frame member **(105)** is offset to said specified direction of the vehicle width direction from a centroid **(Z)** of a different portion of the frame member **(105)** from the bend portion **(T2, T3)**
**characterized by**
forming projections **(121f, 122f)** on both side faces **(121c, 122c)** of said bend portion **(T2, or T3)** of the frame member **(105)** such that the projections **(121f, 122f)** project outward respectively in such a manner that a projecting height **(d1, or d2)** of the projection **(121f, or 122f)** on a specified side face **(121c, or 122c)** of the frame member **(105)** which is located on a side of said specified direction of the vehicle width direction is greater than that **(d2, or d1)** of the projection **(122f, or 121f)** on an opposite side face **(122c, or 121c)** of the frame member **(105)** to said specified side face **(121c, or 122c).**

9. The method of providing a frame structure of claim 8, further comprising the steps of:
providing said frame member **(105)** with a first member **(121)** and a second member **(122)** which are located substantially in the vehicle width direction and have a substantially U-shaped cross section respectively,
joining the first and second members **(121, 122)** to each other via upper and lower flange portions **(121d, 122d, 121e, 122e)** thereof so as to form a substantially closed cross section of the frame member **(105)** which extends substantially in the vehicle longitudinal direction, wherein said first and second members **(121, 122)** preferably have different shapes of the substantially U-shaped cross section in the vehicle longitudinal direction respectively in such a manner that the upper and lower flange portions **(121d, 122d, 121e, 122e)** thereof at said bend portion **(T2, T3)** of the frame member **(105)** are preferably located offset to said specified direction of the vehicle width direction from the upper and lower flange portions **(121d, 122d, 121e**, **122e)** thereof at the different portion of the frame member **(105)** from the bend portion **(T2, T3).**

## Patentansprüche

1. Rahmenstruktur bzw. Rahmenkonstruktion eines Kraftfahrzeugs (1), die umfasst:
ein Rahmenelement (105), das einen im Wesentlichen rechteckigen geschlossenen Querschnitt hat und derart bereitgestellt ist, dass es sich im Wesentlichen gerade in einer Fahrzeuglängsrichtung erstreckt, wobei sein hinterer Endabschnitt mit einer Instrumententafel (4) verbindet oder verbindbar ist; und
einen gebogenen Abschnitt (T2, T3), der an dem Rahmenelement (105) bereitgestellt ist, wobei der gebogene Abschnitt (T2, T3) funktionsfähig ist, um in eine spezifizierte Richtung im Wesentlichen in einer Fahrzeugbreitenrichtung gebogen zu werden, wenn eine Stoßbelastung auf das Rahmenelement (5; 5'; 5"; 105) im Wesentlichen in der Fahrzeuglängsrichtung zugeführt wird,
wobei das Rahmenelement (105) in einer derartigen Weise verschiedene Querschnitte in der Fahrzeuglängsrichtung hat, dass ein Schwerpunkt (Z) des gebogenen Abschnitts (T2, T3) des Rahmenelements (105) in der spezifizierten Richtung der Fahrzeugbreitenrichtung von einem Schwerpunkt (Z) eines anderen Abschnitts des Rahmenelements (105) von dem gebogenen Abschnitt (T2, T3) versetzt ist,
**dadurch gekennzeichnet, dass**
beide Seitenflächen (121c, 122c) des gebogenen Abschnitts (T2 oder T3) des Rahmenelements (105) Vorsprünge (121f, 122f) haben, die jeweils in einer derartigen Weise nach außen vorstehen, dass eine Vorstehhöhe (d1 oder d2) des Vorsprungs (121f oder 122f) auf einer spezifizierten Seitenfläche (121c oder 122c) des Rahmenelements (105), das sich auf einer Seite der spezifizierten Richtung der Fahrzeugbreitenrichtung befindet, größer als die (d2 oder d1) des Vorsprungs (122f oder 121f) auf einer entgegengesetzten Seitenfläche (122c oder 121c) des Rahmenelements (105) zu der spezifizierten Seitenfläche (121c oder 122c) ist.

2. Rahmenkonstruktion eines Kraftfahrzeugs (1) nach Anspruch 1, wobei das Rahmenelement (105), das ein erstes Element (121) und ein zweites Element (122) umfasst, die sich im Wesentlichen in der Fahrzeugbreitenrichtung befinden und jeweils einen im Wesentlichen U-förmigen Querschnitt haben, wobei die ersten und zweiten Elemente (121, 122) jeweils über ihre oberen und unteren Flanschabschnitte (121d, 122d, 121e, 122e) miteinander verbunden sind, um einen im Wesentlichen geschlossenen Querschnitt des Rahmenelements (105) zu bilden, das sich im Wesentlichen in der Fahrzeuglängsrichtung erstreckt, und die ersten und zweiten Elemente (121, 122) bevorzugt jeweils in einer derartigen Weise verschiedene Formen des im Wesentlichen U-förmigen Querschnitts in der Fahrzeuglängsrichtung haben, dass ihre oberen und unteren Flanschabschnitte (121d, 122d, 121e, 122e) an dem gebogenen Abschnitt (T2, T3) des Rahmenelements (105) vorzugsweise an dem zu dem gebogenen Abschnitt (T2, T3) verschiedenen Abschnitt des Rahmenelements (105) gegen ihre oberen und unteren Flanschabschnitte (121d, 122d, 121e, 122e) in der spezifizierten Richtung der Fahrzeugbreitenrichtung versetzt sind.

3. Rahmenkonstruktion eines Kraftfahrzeugs (1) nach Anspruch 2, wobei eine Verbindungslinie der oberen und unteren Flanschabschnitte (121d, 122d, 121e, 122e) der ersten und zweiten Elemente (121, 122) an einem vorderen Abschnitt vor dem gebogenen Abschnitt (T2, T3) des Rahmenelementes (105) und einem hinteren Abschnitt hinter dem gebogenen Abschnitt (T2, T3) des Rahmenelements (105) in einer Draufsicht im Wesentlichen gerade und/oder schräg relativ zu einer Längsrichtung des Rahmenelements (105) verläuft.

4. Rahmenkonstruktion eines Kraftfahrzeugs (1) nach einem oder mehreren der vorhergehenden Ansprüche, wobei eine Vielzahl der gebogenen Abschnitte (T2, T3) des Rahmenelements (105), die funktionsfähig sind, um in zueinander entgegengesetzte Richtungen der Fahrzeugbreitenrichtung gebogen zu werden, bereitgestellt sind, und/oder die Verbindungslinie der oberen und unteren Flanschabschnitte (121d, 122d, 121e, 122e) der ersten und zweiten Elemente (121, 122) an einem Abschnitt zwischen den gebogenen Abschnitten (T2, T3) des Rahmenelements (105) in der Draufsicht im Wesentlichen gerade und/oder schräg relativ zu der Längsrichtung des Rahmenelements (105) verläuft.

5. Rahmenkonstruktion eines Kraftfahrzeugs (1) nach einem oder mehreren der vorhergehenden Ansprüche, wobei eine vertikale Länge (h3 oder h4) des Vorsprungs (121f oder 122f) auf der spezifizierten Seitenfläche (121c oder 122c) des Rahmenelements (105), das sich auf der Seite der spezifizierten Richtung der Fahrzeugbreitenrichtung befindet, größer als die (h4 oder h3) des Vorsprungs (122f oder 121f) auf der zu der spezifizierten Seitenfläche (121c oder 122c) entgegengesetzten Seitenfläche (122c oder 121c des Rahmenelements (105) ist.

6. Rahmenkonstruktion eines Kraftfahrzeugs (1) nach einem oder mehreren der vorhergehenden Ansprüche, wobei der gebogene Abschnitt (T2) derart angeordnet ist, dass er von einem Aufhängungsdämpfer (D) eines Aufhängungselements des Fahrzeugs (1), der sich außerhalb des Rahmenelements (1) befindet, im Wesentlichen in der Fahrzeuglängsrichtung versetzt ist.

7. Rahmenkonstruktion eines Kraftfahrzeugs (1) nach einem oder mehreren der vorhergehenden Ansprüche, wobei an dem vorderen Abschnitt des Vorderseitenrahmens (105) ein Aufpralldämpfer (106) mit im Wesentlichen dem gleichen Querschnitt wie dem des Vorderseitenrahmen (105) in seinem vorderen Abschnitt bereitgestellt ist.

8. Verfahren zum Bereitstellen einer Rahmenkonstruktion eines Kraftfahrzeugs (1), das die folgenden Schritte umfasst:
Bereitstellen eines Rahmenelements (105), das einen im Wesentlichen rechteckigen geschlossenen Querschnitt hat und derart bereitgestellt ist, dass es sich im Wesentlichen gerade in einer Fahrzeuglängsrichtung erstreckt, wobei sein hinterer Endabschnitt mit einer Instrumententafel (4) verbindet oder verbindbar ist; und
Bereitstellen eines gebogenen Abschnitts (T2, T3), der an dem Rahmenelement (105) bereitgestellt ist, wobei der gebogene Abschnitt (T2, T3) funktionsfähig ist, um in eine spezifizierte Richtung im Wesentlichen in einer Fahrzeugbreitenrichtung gebogen zu werden, wenn eine Stoßbelastung auf das Rahmenelement (105) im Wesentlichen in der Fahrzeuglängsrichtung zugeführt wird,
Ausbilden des Rahmenelements (105) in einer derartigen Weise, dass es verschiedene Querschnitte in der Fahrzeuglängsrichtung hat, so dass ein Schwerpunkt (Z) des gebogenen Abschnitts (T2, T3) des Rahmenelements in die spezifizierte Richtung der Fahrzeugbreitenrichtung von einem Schwerpunkt (Z) eines anderen Abschnitts des Rahmenelements (105) von dem gebogenen Abschnitt (T2, T3) versetzt ist,
**gekennzeichnet durch**
Ausbilden von Vorsprüngen (121f, 122f) auf beiden Seitenflächen (121c, 122c) des gebogenen Abschnitts (T2 oder T3) des Rahmenelements (105), so dass die Vorsprünge (121f, 122f) jeweils in einer derartigen Weise nach außen vorstehen, dass eine Vorstehhöhe (d1 oder d2) des Vorsprungs (121f oder 122f) auf einer spezifizierten Seitenfläche (121c oder 122c) des Rahmenelements (105), das sich auf einer Seite der spezifizierten Richtung der Fahrzeugbreitenrichtung befindet, größer als die (d2 oder d1) des Vorsprungs (122f oder 121f) auf einer entgegengesetzten Seitenfläche (122c oder 121c) des Rahmenelements (105) zu der spezifizierten Seitenfläche (121c oder 122c) ist.

9. Verfahren zur Bereitstellung einer Rahmenkonstruktion nach Anspruch 8, das ferner die folgenden Schritte umfasst:
Bereitstellen des Rahmenelements (105) mit einem ersten Element (121) und einem zweiten Element (122), die sich im Wesentlichen in der Fahrzeugbreitenrichtung befinden und jeweils einen im Wesentlichen U-förmigen Querschnitt haben,
Verbinden der ersten und zweiten Elemente (121, 122) jeweils über ihre oberen und unteren Flanschabschnitte (121d, 122d, 121e, 122e) miteinander, um einen im Wesentlichen geschlossenen Querschnitt des Rahmenelements (105) zu bilden, das sich im Wesentlichen in der Fahrzeuglängsrichtung erstreckt, wobei die ersten und zweiten Elemente (121, 122) bevorzugt jeweils in einer derartigen Weise verschiedene Formen des im Wesentlichen U-förmigen Querschnitts in der Fahrzeuglängsrichtung haben, dass ihre oberen und unteren Flanschabschnitte (121d, 122d, 121e, 122e) an dem gebogenen Abschnitt (T2, T3) des Rahmenelements (105) vorzugsweise an dem zu dem gebogenen Abschnitt (T2, T3) verschiedenen Abschnitt des Rahmenelements (105) gegen ihre oberen und unteren Flanschabschnitte (121d, 122d, 121e, 122e) in der spezifizierten Richtung der Fahrzeugbreitenrichtung versetzt sind.

## Revendications

1. Structure à cadre d'un véhicule automobile (1), comprenant :
un élément de cadre (105) qui présente une section transversale fermée sensiblement rectangulaire et est fourni de manière à s'étendre de manière sensiblement en ligne droite dans une direction longitudinale du véhicule, une partie d'extrémité arrière de celui-ci est reliée ou peut être reliée à un tableau de bord (4) ; et
une partie de coude (T2, T3) fournie sur l'élément de cadre (105), la partie de coude (T2, T3) étant efficace pour plier dans une direction spécifiée sensiblement dans une direction de largeur du véhicule lorsqu'une charge d'impact est appliquée à l'élément de cadre (5 ; 5'; 5" ; 105) sensiblement dans la direction longitudinale du véhicule,
dans laquelle ledit élément de cadre (105) présente différentes sections transversales dans la direction longitudinale du véhicule de telle sorte qu'un centroïde (Z) de ladite partie de coude (T2, T3) de l'élément de cadre (105) est décalé par rapport à ladite direction spécifiée de la direction de largeur du véhicule depuis un centroïde (Z) d'une partie différente de l'élément de cadre (105) depuis la partie de coude (T2, T3),
**caractérisée en ce que**
les deux faces latérales (121c, 122c) de ladite partie de coude (T2 ou T3) de l'élément de cadre (105) présentent des saillies (121f, 122f) qui ressortent vers l'extérieur respectivement de telle sorte qu'une hauteur en saillie (d1 ou d2) de la saillie (121f ou 122f) sur une face latérale spécifiée (121c ou 122c) de l'élément de cadre (105) qui est située sur une face de ladite direction spécifiée de la direction de largeur de véhicule est supérieure à celle (d2 ou d1) de la saillie (122f ou 121f) sur une face latérale opposée (122c ou 121c) de l'élément de cadre (105) par rapport à ladite face latérale spécifiée (121c ou 122c).

2. Structure à cadre d'un véhicule automobile (1) selon la revendication 1, dans laquelle ledit élément de cadre (105) comprend un premier élément (121) et un second élément (122) qui sont situés sensiblement dans la direction de largeur du véhicule et présentent une section transversale sensiblement en forme de U, le premier élément et le second élément (121, 122) étant reliés l'un à l'autre via des parties de brides supérieures et inférieures (121d, 122d, 121e, 122e) de ceux-ci pour former une section transversale sensiblement fermée de l'élément de cadre (105) qui s'étend sensiblement dans la direction longitudinale du véhicule, et lesdits premier et second éléments (121, 122) présentent de préférence des formes différentes de la section transversale sensiblement en U dans la direction longitudinale du véhicule respectivement de telle sorte que les parties de brides supérieures et inférieures (121d, 122d, 121e, 122e) de ceux-ci sur ladite partie de coude (T2, T3) de l'élément de cadre (105) sont de préférence situées décalées par rapport à ladite direction spécifiée de la direction de largeur du véhicule depuis les parties de bride supérieures et inférieures (121d, 122d, 121e, 122e) de ceux-ci sur la partie différente de l'élément de cadre (105) depuis la partie de coude (T2, T3).

3. Structure à cadre d'un véhicule automobile (1) selon la revendication 2, dans laquelle une ligne de jonction desdites parties de brides supérieures et inférieures (121d, 122d, 121e, 122e) des premier et second éléments (121, 122) sur une partie avant à l'avant de ladite partie de coude (T2, T3) de l'élément de cadre (105) et une partie arrière à l'arrière de ladite partie de coude (T2, T3) de l'élément de cadre (105) s'étend sensiblement en ligne droite et/ou oblique par rapport à une direction longitudinale de l'élément de cadre (105) dans une vue en plan.

4. Structure à cadre d'un véhicule automobile (1) selon une quelconque ou plusieurs des revendications précédentes, dans laquelle est fournie une pluralité desdites parties de coude (T2, T3) de l'élément de cadre (105) qui sont efficaces pour plier les unes par rapport aux autres dans des directions opposées de la direction de largeur du véhicule, et/ou la ligne de jonction des parties de brides supérieures et inférieures (121d, 122d, 121e, 122e) des premier et second éléments (121, 122) sur une partie entre les parties de coude (T2, T3) de l'élément de cadre (105) s'étend sensiblement en ligne droite et/ou oblique par rapport à la direction longitudinale de l'élément de cadre (105) dans une vue en plan.

5. Structure à cadre d'un véhicule automobile (1) selon une quelconque ou plusieurs des revendications précédentes, dans laquelle une longueur verticale (h3 ou h4) de la saillie (121f ou 122f) sur la face latérale spécifiée (121c ou 122c) de l'élément de cadre (105) qui est située sur la face de ladite direction spécifiée de la direction de largeur du véhicule est supérieure à celle (h4 ou h3) de la saillie (122f ou 121f) sur la face latérale opposée (122c ou 121c) de l'élément de cadre (105) par rapport à la face latérale spécifiée (121c ou 122c).

6. Structure à cadre d'un véhicule automobile (1) selon une quelconque ou plusieurs des revendications précédentes, dans laquelle ladite partie de coude (T2) est située de manière à être décalée sensiblement dans la direction longitudinale du véhicule depuis un amortisseur de suspension (D) d'un élément de suspension du véhicule (1) qui est situé à l'extérieur dudit élément de cadre (105).

7. Structure à cadre d'un véhicule automobile (1) selon une quelconque ou plusieurs des revendications précédentes, dans laquelle une gaine d'écrasement (106) ayant sensiblement la même section transversale que le cadre latéral avant (105) sur une partie avant de celui-ci est fournie sur ladite partie avant dudit cadre latéral avant (105).

8. Procédé de fourniture d'une structure à cadre d'un véhicule automobile (1), comprenant les étapes suivantes :
fourniture d'un élément de cadre (105) présentant une section transversale fermée sensiblement rectangulaire pour s'étendre de manière sensiblement droite dans une direction longitudinale du véhicule, une partie d'extrémité arrière de celui-ci est reliée ou peut être reliée à un tableau de bord (4) ; et
fourniture d'une partie de coude (T2, T3) sur l'élément de cadre (105), la partie de coude (T2, T3) étant efficace pour plier dans une direction spécifiée sensiblement dans une direction de largeur du véhicule lorsqu'une charge d'impact est appliquée à l'élément de cadre (105) sensiblement dans la direction longitudinale du véhicule, et
formation dudit élément de cadre (105) de telle sorte qu'il présente différentes sections transversales dans la direction longitudinale du véhicule de telle sorte qu'un centroïde (Z) de ladite partie de coude (T2, T3) de l'élément de cadre (105) est décalé par rapport à ladite direction spécifiée de la direction de largeur du véhicule depuis un centroïde (Z) d'une partie différente de l'élément de cadre (105) depuis la partie de coude (T2, T3),
**caractérisé par**
la formation de saillies (121f, 122f) sur les deux faces latérales (121c, 122c) de ladite partie de coude (T2 ou T3) de l'élément de cadre (105) telle que les saillies (121f, 122f) ressortent vers l'extérieur respectivement de telle sorte qu'une hauteur en saillie (d1 ou d2) de la saillie (121f ou 122f) sur une face latérale spécifiée (121c ou 122c) de l'élément de cadre (105) qui est située sur une face de ladite direction spécifiée de la direction de largeur de véhicule est supérieure à celle (d2 ou d1) de la saillie (122f ou 121f) sur une face latérale opposée (122c ou 121c) de l'élément de cadre (105) par rapport à ladite face latérale spécifiée (121c ou 122c).

9. Procédé de fourniture d'une structure à cadre selon la revendication 8, comprenant en outre les étapes suivantes :
fourniture au dit élément de cadre (105) d'un premier élément (121) et d'un second élément (122) qui sont situés sensiblement dans la direction de largeur du véhicule et présentent une section transversale sensiblement en forme de U respectivement,
la liaison du premier élément et du second élément (121, 122) entre eux via des parties de brides supérieures et inférieures (121d, 122d, 121e, 122e) de ceux-ci pour former une section transversale sensiblement fermée de l'élément de cadre (105) qui s'étend sensiblement dans la direction longitudinale du véhicule, lesdits premier et second éléments (121, 122) présentant de préférence des formes différentes de la section transversale sensiblement en U dans la direction longitudinale du véhicule respectivement de telle sorte que les parties de brides supérieures et inférieures (121d, 122d, 121e, 122e) de ceux-ci sur ladite partie de coude (T2, T3) de l'élément de cadre (105) sont de préférence situées décalées par rapport à ladite direction spécifiée de la direction de largeur du véhicule depuis les parties de brides supérieures et inférieures (121d, 122d, 121e, 122e) de ceux-ci sur la partie différente de l'élément de cadre (105) depuis la partie de coude (T2, T3).
